# EUROPEAN PATENT SPECIFICATION

(11) **EP 2 011 975 B1**
(45) Date of publication and mention of the grant of the patent: **14.10.2009**
(21) Application number: 07013319.4
(22) Date of filing: 06.07.2007
(51) Int. Cl.: F01N 3/20, F01N 7/08

(54) **An exhaust gas purifying apparatus for a motor vehicle and motor vehicle**
Abgasreinigungsvorrichtung für ein Kraftfahrzeug sowie Kraftfahrzeug
Appareil de purification de gaz d'échappement pour véhicule à moteur et véhicule à moteur

(43) Date of publication of application: 07.01.2009
(73) Proprietor: Yamaha Motor Research & Development Europe s.r.l., 20050 Gerno di Lesmo (MI) (IT)
(72) Inventor: Nakano, Kunio, 20146 Milano (IT); Sommariva, Roberto, 27100 Pavia (IT); Longoni, Vittorio, 22060 Arosio (CO) (IT)
(74) Representative: Grünecker, Kinkeldey, Stockmair & Schwanhäusser Anwaltssozietät

(56) References cited:
- EP-A- 0 411 561
- EP-A- 1 609 963
- EP-A- 1 726 798
- EP-A- 1 749 988
- JP-A- 2 163 407
- JP-A- 53 137 326
- JP-A- 2006 316 782
- US-A- 4 261 170

## Description

The present invention relates to an exhaust gas purifying apparatus for a motor vehicle and a respective motor vehicle comprising such an exhaust gas purifying apparatus.

It is well known in the automotive field that nowadays vehicles with combustion engines have to be equipped with catalysts, so as to comply with anti pollution rules and/or requirements. This, in particular, applies to both usual motor vehicles, such as, for example normal cars, and other motor vehicles, such as, for example motorbikes and/or other three or four wheeled motorcycles, such as choppers, quads, or the like. The function of the catalysts received inside the exhaust gas pipe is that of collecting and trapping the pollutant components of the exhaust gases, thus allowing only permitted substances to be emitted and dispersed in the atmosphere. Accordingly, many efforts have been dedicated during the last years to the development of exhaust gas pipes offering improved and adequate performances. However, the development of exhaust gas pipes for motorcycles offering adequate performance and efficiency in terms of quantity of pollutant substances captured and trapped, but still complying with the other requirements related to motorcycles, in particular to motorbikes, revealed to be a quite difficult and challenging task. In particular, this is due to the fact that, as anticipated above, an exhaust pipe with catalysts for a motorcycle has to comply with many requirements. One of them relates to the activation temperature of the catalysts, namely the temperature range within which adequate performances in terms of pollutants captured are possible. This activation temperature is not reached by the catalyst immediately after the start of the combustion engine but only after a certain time interval. This time interval depends in turn on the distance between the exhaust gas port of the combustion engine (to which the exhaust gas pipe is connected) and the catalyst. In this respect, it has to be noted that the activation temperature of common catalysts is usually comprised between approximately 550 and 650 °C. This activation temperature is reached due to the hot exhaust gases passing across the catalyst. However, the temperature of the exhaust gases decreases as a function of the time needed by the exhaust gases to reach the catalyst or, in other words, as a function of the distance between the exhaust gas port of the cylinder head and the catalyst. Moreover, the temperature of the exhaust gases is at its highest value immediately after it passes through the exhaust gas port of the cylinder head, decreases along the exhaust gas pipe, and reaches its lowest value at the output of the silencer of the exhaust pipe.

A further requirement to be taken into consideration relates to the positioning and disposition of a catalyst within the exhaust gas pipe. To find a convenient location for the catalysts revealed, in fact, to be a critical issue in terms of both the overall design of the motorcycles and the comfort of the driver and/or passenger. Common catalysts have, in fact, a length usually comprised between about 10 cm up to 25-35 cm; this means that, in those cases in which at least two catalysts are used, at least two rectilinear portions of the exhaust gas pipe with the same length or more, each adapted to receive one of the two catalysts, have to be provided. It appears therefore clearly that further problems arose due to the difficulty of finding the right location for these two rectilinear portions without negatively affecting the overall design of the motorcycle.

It has furthermore to be noted that in the case of special motorcycles such as, for instance, off road motorcycles, a predefined minimal distance has to be left between the exhaust gas pipe and the ground, otherwise the motorcycle cannot adequately exploit the purposes for which it is designed.

In an attempt to meet as many as possible of the criteria and/or requirements outlined above, several solutions relating in particular to exhaust gas pipes have been proposed in recent years by the manufacturers of motorcycles. For instance, solutions have been suggested according to which one or both of the two catalysts are placed immediately behind the combustion chamber of the engine; however, even if, on the one hand with this solution it is possible to raise the activation temperature of the catalysts within a short time after starting the engine, on the other hand, the problem arises that the resistance of the exhaust gas flow is increased, thus resulting in the output characteristics of the engine to be negatively affected.

According to another solution known in the prior art, the exhaust pipe, once applied to the motor cycle, is allowed to pass along a side of the cylinder block and to extend toward the rear of the body of the motorcycle, with the two catalysts both being positioned on the side of said cylinder block. However, even if it can be appreciated that according to this solution the two catalysts are not placed too far away from the combustion chamber, so that, on the one hand, the time for reaching the activation temperature is not unduly augmented, on the other hand, other disadvantages arise, relating in particular to the design of the motorcycle. Further improvements of this solution have been proposed according to which the catalysts are placed very close to the combustion chamber, so as to leave adequate clearance between the catalysts and the leg of the passenger and/or driver. However, when this solution is adopted, a further disadvantage arises, due to the fact that the temperature of the catalyst may arise excessively, in particular, beyond the allowed activation temperature.

Further examples of prior art exhaust gas purifying apparatuses can be found in each of documents JP02163407A, JP53137326A and EP-A-1749988.

Therefore, it results from the above that in spite of all the efforts made, the solutions proposed in the past and known in the prior art do not meet all the essential requirements which have to be taken into consideration during the design of a motorcycle. In particular, the proposed solutions do not meet the need of an exhaust gas pipe offering a good performance in terms of functionality and reliability of the catalysts, as well as in terms of the overall look of the motorcycle.

Accordingly, in view of the above, it is an object of the present invention to provide an exhaust gas purifying apparatus for a motor vehicle and a motor vehicle, in particular a motorcycle, wherein adequate performances of the catalysts in term of functionality and reliability are offered without negatively affecting other important criteria and/or requirements, such as, for instance overall dimensions and/or external look of the motor cycle.

In general terms, the present invention is based on the consideration that the problems affecting the prior art exhaust gas pipes may be overcome by providing an exhaust gas pipe comprising different portions opportunely curved and wherein the two catalysts are located adequately along the exhaust gas pipe. A further consideration on which the present invention is based relates to the fact that if at least one of the two catalysts is located in a front area of the engine, the distance between the exhaust port of the combustion chamber and the inlet of at least one catalyst may be kept low enough to allow at least the activation temperature of said first catalyst to be reached quickly, whilst at the same time maintaining the clearance between both catalysts and the cylinder block large enough to avoid the situation that the temperature of same increases beyond the allowed activation temperature.

On the basis of the considerations as stated above, the above objectives are solved by the features of claims 1 and 14.

Preferred embodiments are laid down in the dependent claims.

Further advantages, objects and features as well as embodiments of the present invention are defined in the appended claims and will become more apparent with the following detailed description when taken with reference to the accompanying drawings, in which identical or corresponding parts are identified by the same reference numerals. In particular, in the drawings:
Figure 1 relates to a schematic side view of a motorcycle equipped with an exhaust gas purifying apparatus according to a first embodiment of the present invention;
Figure 2 relates to a schematic exploited view of a portion of a motorcycle equipped with an exhaust gas purifying apparatus according to a first embodiment of the present invention;
Figure 3 relates to an exploited view of an exhaust gas purifying apparatus according to a first embodiment of the present invention;
Figure 4 relates to an exploited schematic front view of a portion of a motorcycle equipped with an exhaust gas purifying apparatus according to a first embodiment of the present invention; and
Figure 5 relates to a schematic front view of a motorcycle equipped with an exhaust gas purifying apparatus according to a first embodiment of the present invention;
Figure 6 relates to a schematic partial side view of a motorcycle equipped with an exhaust gas purifying apparatus according to a further embodiment of the present invention;
Figure 7 relates to a schematic partial side view of a motorcycle equipped with an exhaust gas purifying apparatus according to still a further embodiment of the present invention;
Figure 8 relates to a schematic partial side view of a motorcycle equipped with an exhaust gas purifying apparatus according to a further embodiment of the present invention.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather the described illustrative embodiments merely exemplify the various aspects of the present invention, the scope of which is defined by the appended claims.

The present invention is understood to be of particular advantage when applied to two wheeled motorcycles, such as, for instance, motorbikes. For this reason, examples will be given in the following, in which corresponding embodiments of the exhaust gas purifying apparatus according to the present invention are applied to motorbikes. However, it has to be noted that the applications of the exhaust gas purifying apparatus according to the present invention are not limited to the case of motorbikes; on the contrary, the exhaust gas purifying apparatus according to the present invention may also be applied to other motorcycles, in particular to three or even four wheeled motorcycles such as for instance, choppers, quads, or the like.

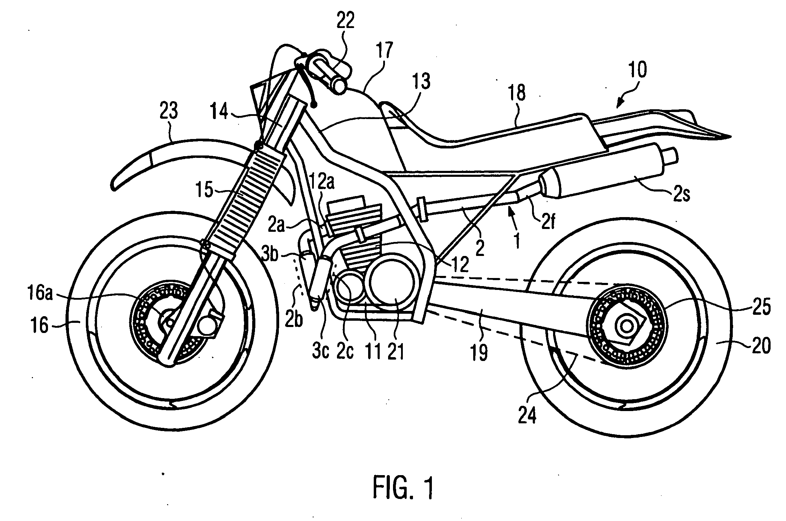

In the following, some details and features of the exhaust gas purifying apparatus according to the present invention will be described with reference to Figure 1.

In Figure 1, a motorcycle 10 is depicted. Although some portions common to usual motorcycles have been emitted in Figure 1 for reasons of clarity, the essential features of said motorcycles have been depicted and relate in particular to a main frame 13 adapted to support a main engine 11 comprising a crankcase 21 and a cylinder 12 (in the following also referred to as cylinder head or cylinder block 12). The main frame 13 further supports a seat 18 and a fuel tank 17. Moreover, a head pipe 14 is located on the front portion of the main frame 13 whilst a front forks 15 extends from the head pipe 14, with said front fork 15 being steerably attached to the main frame 13 by means of said head pipe 14. A front wheel is attached to the front fork 15 by means of a front axle 16a.

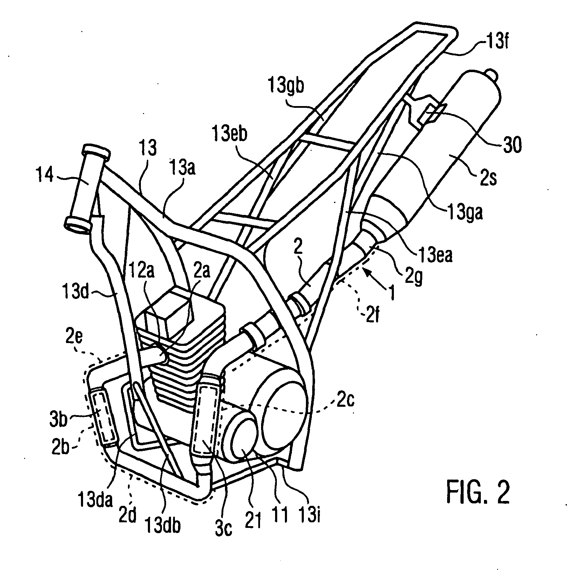

In the same way, the motorcycle 10 comprises a rear wheel 20 with a sprocket 25;whilst a chain 24 transmits drive force to the rear wheel 20 through the sprocket 25. Reference numeral 22 identifies handlebars provided with brake handles and corresponding cables extending therefrom. The rear wheel 20 is supported by a supporting arm 19 pivotally connected to the main frame 13 through a pivoting connection (not depicted in Figure 1). Reference numeral 23 identifies a front fender provided to avoid the motorcycle 10 and the driver and/or passenger from being splashed with mud. As anticipated above, some usual component parts and/or features of common motor cycles have not been depicted in Figure 1 for reasons of clarity; the features not depicted may relate for instance to a rear cushion, rear and front direction indicators, rear fender, a speed reducer, details of the engine and/or crankcase, rear direction indicators, or the like. Even if not essential to the present invention, these omitted features and all their equivalents have to be considered as comprised in the motorcycle depicted in Figure 1.
Still with reference to Figure 1, reference numeral 1 identifies an exhaust gas purifying apparatus according to the present invention; said exhaust gas purifying apparatus comprises a main pipe 2 extending from an exhaust port 12a of the cylinder head 12 to the rear silencer 2s. The main pipe 2 is connected to the exhaust port 12a through a first end portion 2a and extends toward the rear of the motorcycle 10. Whilst further details of the exhaust gas purifying apparatus according to the present invention will be described in the following with reference to Figures 2 to 5, it can be mentioned at present that the exhaust gas purifying apparatus 1 comprises two catalysts 3b and 3c received into corresponding portions 2b and 2c of the main pipe. Moreover, as apparent from Figure 1, the two catalysts 3b and 3c are located in the space in a front area of the engine 11, in particular, in between the engine 11 and the front wheel 16. This particular location of the two catalysts essentially allows a portion of the main pipe 2 without catalysts to be disposed on the side of the engine 11 (in particular, on the side of the cylinder head 12). This portion without catalysts has a diameter which is lower than that of the two portions 2b and 2c receiving the two catalysts 3b and 3c, respectively. Accordingly, enough clearance is created between this portion of the main pipe 2 and the leg of the driver and/or passenger. In particular, as depicted in Figure 1, it is possible to locate the main pipe 2 inside the main frame 13. Moreover, the distance along the main pipe 2 between the exhaust port 12a and the catalysts 3b and 3c is small enough to allow the activation temperature of said two catalysts to be reached quickly. Finally, there is enough clearance between the cylinder head 12 and both catalysts 3b and 3c, so that there is no disadvantage that the catalysts become overheated due to the heat emitted by the cylinder head 12. The main requirements disclosed in the introductory portion of the present application may therefore be met.

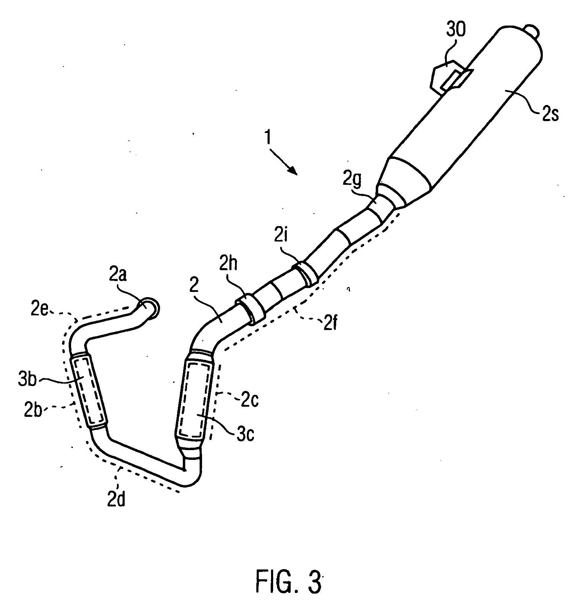

In the following, further details and/or features of the exhaust gas purifying apparatus according to the present invention will be disclosed with reference to Figure 3. In Figure 3, those features already described with reference to Figure 1 are identified by the same reference numerals.
As apparent from Figure 3, the exhaust gas purifying apparatus 1 comprises a first end portion 2a and a second end portion 2g, with the main pipe 2 extending between them. The first end portion 2a is adapted to be connected to the exhaust port 12a of the cylinder head 12 (see in particular figures 1 and 2) whilst a silencer 2s is connected to the second end portion 2g. Fixing means 30 are provided for fixing the silencer 2s to the main frame 13, thus offering improved stability to the overall exhaust gas purifying apparatus 1 and avoiding damage that my be caused by, for example, excessive vibration during use of the apparatus 1. The first intermediate portion 2b (in which a first catalyst 3b is received) is connected to the second intermediate portion 2c (in which a further catalyst 3c is received) through a third intermediate portion 2d; according to the embodiment depicted in Figure 3, said third intermediate portion 2d extends substantially horizontally. However, according to the present invention, other embodiments are possible, such as, for instance, embodiments according to which the third intermediate portion 2d comprises a bent and/or curved portion, with said bent or curved portion being oriented either toward the top or toward the bottom. Moreover, it may be appreciated from Figure 3 that once the exhaust gas purifying apparatus 1 is applied to a motorcycle as depicted for instance in Figure 1, the first and second intermediate portions 2b and 2c extend substantially vertically. Moreover, is also possible to provide a main pipe 2, curved or bent in such a way that the first and second intermediate portions 2b and 2c extend essentially parallel to each other. The main pipe 2 further comprises a fourth intermediate portion 2e disposed between the first end portion 2a and the first intermediate portion 2b. In particular, said fourth intermediate portion 2e comprises a portion (in proximity of the end portion 2a) bent to the right (when seen from a driver or passenger sitting on the motor cycle), a subsequent substantially rectilinear portion extending slightly downward and a further portion (in proximity of the first intermediate portion 2b) bent downward and slightly to the left. A further fifth intermediate portion 2f of the main pipe 2 extends from the second intermediate portion 2c towards the rear of the motorcycle (see also figure 2). It is this fifth intermediate portion 2f (inside which no catalysts are arranged) which passes along the side of the engine 11. As apparent from Figure 3, said fifth intermediate portion 2f may comprise, according to the circumstances, further sub portions in order to be better or more conveniently located and disposed with respect to the motorcycle, in particular with respect to the engine 11 and the frame 13. As apparent from Figure 3, these further sub portions are connected by means of connecting elements or portions 2h and 2i. In particular, these connecting elements may comprise screw connecting elements. However, according to the circumstances, other solutions may be adopted such as, for instance welding the sub portions to each other. It has furthermore to be noted that also the other intermediate portions of the main pipe 2 may be connected to each other according to any of the solutions well known to those skilled in the art without leaving the scope of the present invention.

With the following disclosure given with reference to Figure 2, it will become possible to better appreciate the distinguishing features of the exhaust gas purifying apparatus according to the embodiment of the present invention depicted therein, along with the advantages offered by said exhaust gas purifying apparatus; as usual, in Figure 2, those features already described with reference to previous and/or other Figures are identified by using the same reference numerals.

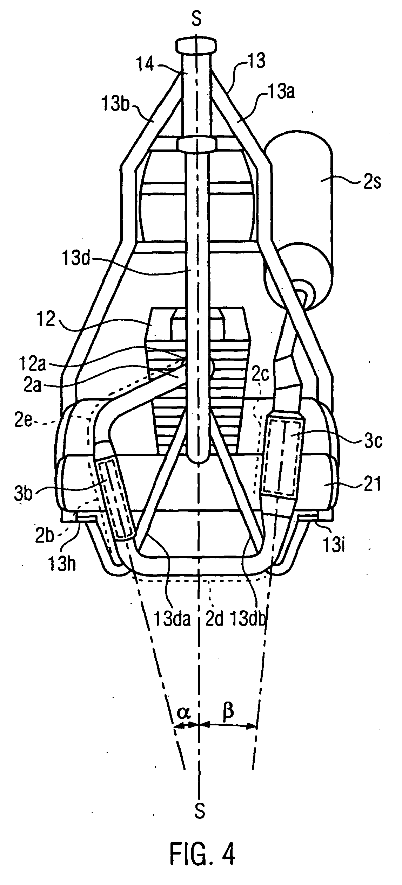

As apparent from Figure 2, the main frame 13 comprises a head pipe 14, adapted to pivotally support the handlebar 22 of the motorcycle 10 with a left tube 13a extending from said head pipe 14 downward and to the left of the motorcycle so as to terminate behind the engine 11, in particular behind the crankcase 21. A further corresponding tube 13b (see in particular Figure 4) extends from the head pipe 14 downward and to the right of the motorcycle and symmetrically with respect to the left tube 13a. Also the right tube 13b terminates behind the engine 11, in particular behind the crankcase 21. A further tube 13d extends downward from the head pipe 14 in a direction substantially vertical. Corresponding connection tubes 13db and 13da are provided for connecting the substantially vertical tube 13d to the left tube 13a and the right tube 13b, respectively. A further u-shaped tube 13f extends toward the rear of the motorcycle with the two end portions of said u-shaped tube 13f being connected to the left tube 13b and the right tube 13a, respectively. Further tubes are provided to improve the stability of the frame. These comprise intermediate tubes 13ea and 13eb, as well as further intermediate tubes 13ga and 13gb.

When looking at Figure 2, some statements and/or considerations along those anticipated above and relating to the particular disposition of the different portions of the exhaust gas purifying apparatus 1 according to the present invention as well as to the several advantages offered, may be better understood and/or appreciated. It appears, for instance, clearly from Figure 2 that the intermediate portion 2f of the main pipe 2 (without catalysts receive therein) extends toward the rear of the motorcycle and is allowed to pass along the side of the cylinder block 12, in particular between the cylinder head 12 and the left tubes 13a and 13ea. The two catalysts 3b and 3c result in being disposed in the area in front of the engine thus offering the advantages cited above relating to their improved performances in terms of functionality and reliability, due to the fact that the distance, along the main pipe 2 between said catalysts (in particular, between the catalyst 3b) and the exhaust port 12a of the cylinder block is such as to allow the activation temperature of the catalysts to be reached quickly. Moreover, since the two catalysts are disposed on corresponding opposite sides with respect to the plane of symmetry of the motorcycle, the possibility is still offered to locate the tubes 13d, 13da and 13db adequately and in a convenient manner, in particular, without being forced to improve the overall dimension of the main frame 13. A certain clearance may furthermore be maintained between the cylinder head 12 and the catalysts, so that it can be prevented the two catalysts from becoming overheated. Moreover, due to the fact that the two catalysts 3b and 3c, as well as, accordingly, the two intermediate portions 2b and 2c of the main pipe 2 receiving them, are disposed in a direction substantially vertical, adequate clearance may be maintained between the two catalysts and the ground. The same considerations apply to the intermediate portion 2d which, as depicted in Figure 2, extends in a direction substantially horizontal. Accordingly, also these intermediate, connecting portions 2b do not reduce the clearance with respect to the ground. The particular embodiment depicted in figure 2, in addition to the advantages offered as explained above, provides the further advantages of being particularly suitable for off road motor cycles.

In the following, with reference to Figure 4, further details and/or features of the exhaust gas purifying apparatus according to the embodiment of the present invention depicted therein will be described; as usual, features already described above with reference to previous figures are identified in Figure 4 with the same reference numerals.

When looking at Figure 4, the location of the two catalysts 3b and 3c, as well as that of the several portions of the main pipe 2 with respect to the frame 13 and to the engine 11 (cylinder head 12 and crankcase 21) may be well appreciate. For instance, it appears clearly from Figure 4 that the first intermediate portion 2b in which the catalyst 3b is located is slightly inclined with respect to the vertical direction; in particular, the bottom of the first intermediate portion 2b is displaced with respect to its top inwardly or toward the left of the motorcycle, i.e. toward the right in Figure 4. In the same way, also the intermediate portion 2c, in which the catalyst 3c is received, is slightly inclined with respect to the vertical; in particular, the bottom of the intermediate portion 3b is displaced toward the right of the motorcycle, i.e. toward the left in Figure 4, with respect to the top. This slight inclination of one or both of the two intermediate portions 2b and 3c allows in particular to reduce the length of the intermediate portions 2d, to which the two intermediate portions 2b and 2c are connected. In this way, not only the distance between the exhaust gas port 12a and the first catalyst 3b is reduced, but also the distance between the exhaust gas port 12a and the second catalyst 3c. Accordingly, not only the activation temperature of the first catalyst 3b may be reached quickly once the engine is started but also that of the second catalyst 3c, with corresponding evident advantages in terms of functionality and performances of the second catalyst 3c as well. Of course, the inclination of one or both of the two intermediate portions 2b and 2c and, accordingly, the length of the further intermediate portion 2d may be selected according to the circumstances and/or exigencies. In the embodiment depicted in Figure 4, the angle α of inclination of the first intermediate portion 2b with respect to the vertical direction (lying in the plane of symmetry S-S) is bigger than the angle β of inclination of the intermediate portion 2c with respect to the vertical direction; this solution is preferred to optimize the overall layout of the motor vehicle. As stated above, the values of the two corresponding angles α and β may be selected according to the circumstances and/or particular exigencies.

It appears moreover clearly from figure 4 than the diameter of the second catalyst 3c is bigger than that of the first catalyst 3b; moreover, also the volume of the second catalyst 3c is larger than hat of the first catalyst 3b. This solution allows to improve the performances of the overall exhaust gas purifying apparatus.

A further feature of the exhaust gas purifying apparatus according to the present invention which may be well appreciated when looking at Figure 4 relates to the fact that the catalysts 3b and 3c are located on opposite sides with respect to the plane of symmetry S-S of the motorcycle. This allows, in particular the optimization of the design of the assembly with evident advantages for the overall look of the motorcycle as well as from the point of view of saving design and production costs.

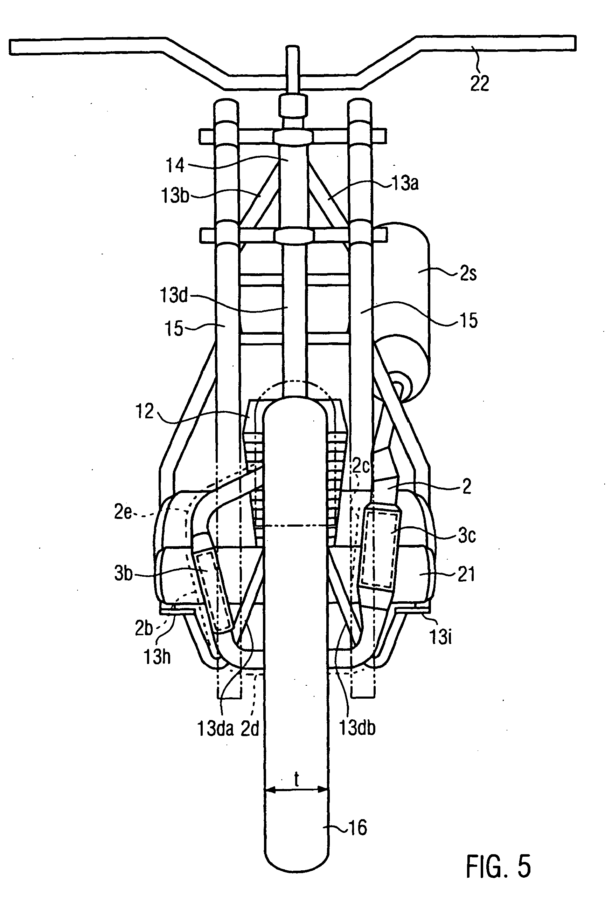

With reference to Figure 5, further features of the exhaust gas purifying apparatus according to the embodiment of the present invention depicted therein will be described in the following; once again, in Figure 5, those features already described above with reference to previous Figures are identified in Figure 5 with the same reference numerals.

It appears in particular in Figure 5, that the clearance between the two catalysts 3b and 3c along a direction perpendicular to the plane of symmetry of the motor cycle (see also Figure 4) is less than the width of the front wheel 16. This means that both catalysts 3b and 3c are visible when looking at the motorcycle from the front. This disposition of the two catalysts 3b and 3c allows an increase of the heat dissipation of the external surface of the catalysts cases; therefore the situation that the external temperature of the two catalysts increases too much is avoided. A further situation is also avoided, namely that of the internal temperature of the two catalysts increasing beyond the activation temperature allowed. Furthermore, the possibility of contact of mud coming from the front wheel with the catalysts is also reduced, this also allowing avoiding overheating due to a resulting reduced thermal dissipation.

Furthermore, it appears from Figure 5 that both catalysts are located substantially within the overall width of the crankcase 21; this allows the overall transversal dimension of the motorcycle to be contained, thus improving the look, design and functionality of the motorcycle.

It also appears from Figure 5 that both the two catalysts 3b, 3c and the intermediate portion 2b of the main pipe 2 are located at a height with respect to the ground which is larger than the height of the crankcase 21 and the frame 13 (in particular of the tubes 13da and 13db) with respect of the ground,. This avoid accidental contact of the exhaust gas purifying apparatus with the ground or obstacles to be reduced.

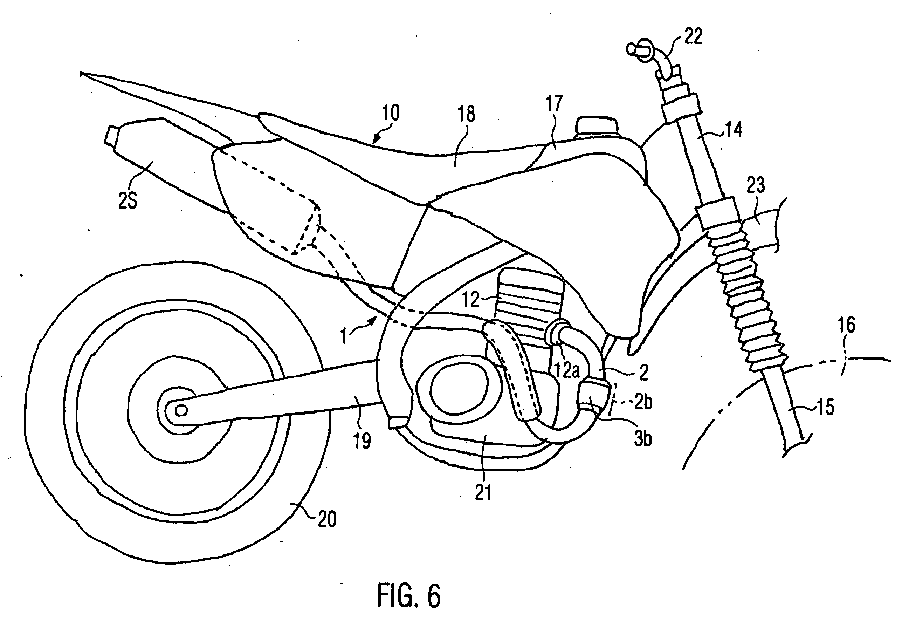

In the following, with reference to Figure 6, a further embodiment of the exhaust gas purifying apparatus according to the present invention will be described; as also in this case, features already described above with reference to previous Figures are identified in Figure 6 with the same reference numerals. Moreover, all those features depicted in previous Figures and relating to the motorcycle have to be considered also as belonging to the motorcycle depicted in Figure 6.

The exhaust gas purifying apparatus according to the embodiment of the present invention depicted in Figure 6 differs from the exhaust gas purifying apparatus according to other embodiments of the present invention depicted in Figures 1-5 and described above essentially in that, in the exhaust gas purifying apparatus of Figure 6 a single or unique catalyst 3b is provided. As apparent from Figure 6, said catalyst 3b is received inside an intermediate portion to be of the main pipe. Moreover, said intermediate portion 2b accommodating said catalyst 3b is disposed in a front area of the engine 11.

The advantages offered by the embodiment depicted in Figure 6 may be summarized as follows. First of all, due to the fact that the intermediate portion 2b of the main pipe 2 is located in the space in a front area of the engine 11, the distance between the catalyst 3b and the exhaust port 12a may be kept small enough to allow the activation temperature of said catalyst 3b to be reached quickly. Accordingly, the same performances in terms of pollutant substances captured by the catalyst 3b offered by the embodiment disclosed above and comprising two catalysts are also offered by the embodiment depicted in Figure 6. Moreover, the main pipe 2 may extend to the rear so as to be disposed on the side of the engine 11 (in particular on the side of the cylinder head 12). In particular, due to the fact that no further catalysts are accommodated along the main pipe 2, the clearance between the main pipe 2 and the cylinder head 12 may be reduced according to the needs and/or circumstances, so that the overall lateral dimension of the motorcycle can be further reduced.

As apparent from Figure 6, the main pipe 2 exiting the exhaust port 12a is slightly bent to the right and downward when seen from the driver or passenger sitting on the motorcycle; this in particular allows the main pipe 2 downstream with respect to the portion 2b to be disposed on the right side of the engine. However, it has to be noted that this embodiment of the exhaust gas purifying apparatus of the present invention also allows other solutions according to which, for instance, the main pipe 2 exiting the exhaust port 12a is slightly bent to the left and downward; in this case, the main pipe 2 may be disposed on the left side of the engine.

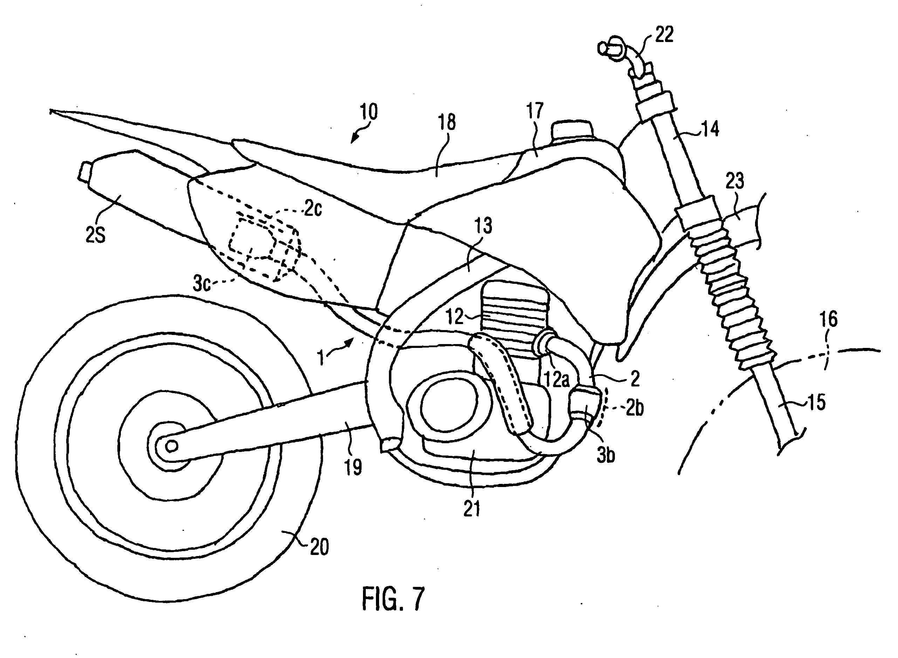

A further embodiment of the present invention will be described in the following with reference to Figure 7 wherein features already described with reference to previous use are identified by the same reference numerals; moreover, features relating to the motorcycle and eventually not depicted in Figure 7 but disclosed above and/or depicted in previous Figures are also to be regarded as belonging to the motorcycle depicted in Figure 7.

The main features of the exhaust gas purifying apparatus according to the embodiment of the present invention depicted in Figure 7 relate to the fact that this embodiment does comprise two catalysts, in particular a first catalyst 3b received in a first intermediate portion 2b and a second catalyst 3c. However, as apparent from Figure 7, said second catalyst 3c is received in a portion 2c of the main pipe 2 disposed in proximity of the end portion of the main pipe 2. In particular, said second catalyst 3c is received inside the silencer 2s. Accordingly, also in this case, the activation temperature of the first catalyst 3b may be reached quickly due to the reduced distance between said catalyst 3b and the exhaust port 12a. Moreover, also in this case, the clearance between the main tube 2 and the engine 11 and/or cylinder head 12 may be kept as small as needed according to the circumstances, with evident advantages in terms of the overall lateral dimension of the motorcycle. However, due to the presence of two catalysts, the same advantage in terms of pollutant substances captured offered by the embodiment disclosed above with reference to Figures 1-5 are also offered by the embodiment depicted in Figure 7. Of course, also in the case of the embodiment depicted in Figure 7 the main pipe 2 exiting the exhaust port 12a may be either slightly bent to the right and downward or to the left and downward so that the main tube 2 downstream with respect to the first catalyst 3b may be disposed on the right side or on the left side of the engine respectively.

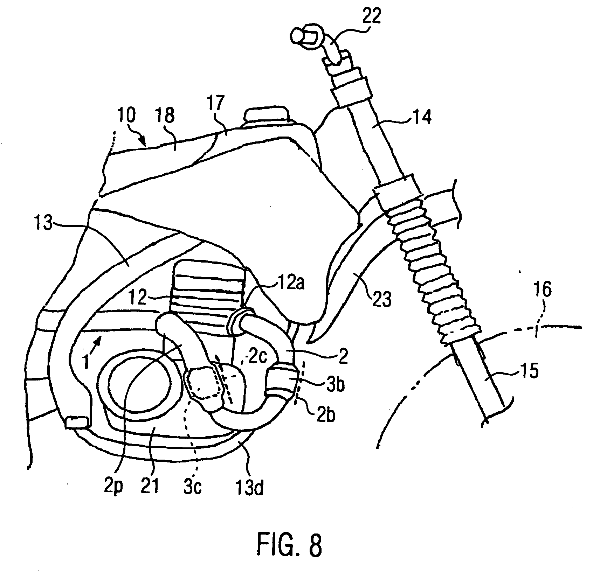

In the following, Figure 8, still with reference to the embodiment of the exhaust gas purifying apparatus according to the present invention, will be described; again, features already described with reference to previous Figures are identified in Figure 8 with the same reference numerals. Moreover, features relating to the motorcycle depicted in previous Figures and eventually not depicted in Figure 8 are to be considered as belonging also to the motorcycle depicted in Figure 8.

The exhaust gas purifying apparatus according to the embodiment of the present invention depicted in Figure 8 does comprise two catalysts 3b and 3c; however, this embodiment differs from other embodiments previously described and comprising two catalysts in the way said two catalyst 3b and 3c are disposed along the main pipe 2 of the exhaust gas purifying apparatus. In fact, as apparent from Figure 8, a first catalyst 3b is received in a first portion 2b of the main tube 2, with said first portion to be (or at least part of it) located in the space in a front area of the engine 11, in particular in between the engine 11 and the front wheel 16. The height along the vertical direction of said portion 2b of the main tube 2 accommodating said first catalyst 3b may be selected according to the circumstances; in particular the portion 2b may be disposed either in proximity of the cylinder 12 or in proximity of the crankcase 21. As apparent from Figure 8, the second catalyst 3c is received inside a second portion 2c of the main tube 2, with said portion 2c being disposed on the side (on the right side in Figure 8) of the engine. Also, the height along the vertical direction of the portion 2c of the main tube 2 may be selected according to the circumstances so that said portion 2c may be located either in closer proximity to the cylinder 12 or in closer proximity to the crankcase 21.

The advantages offered by the solution depicted in Figure 8 in terms of performances of the exhaust gas purifying apparatus (i.e. in terms of the pollutant substances captured) are substantially the same advantages offered by the other embodiments of the present invention comprising two catalysts. However, with the embodiment depicted in Figure 8 a further advantage is obtained, namely that the space in the front area of the engine is not obstructed but more space is left at disposal for eventually accommodating other components of the motorcycle. The eventual overheating of the second catalyst 3c due to its proximity with the cylinder 12 is overcome by providing protecting means to be as depicted in Figure 8. Similarly to the embodiments of Figures 6 and 7, also in the case of the embodiment depicted in Figure 8 the second catalyst 3c may be located on the left side of the engine; in this case, the main pipe 2 exiting the exhaust port 12a is slightly bent downward and to the left.

Therefore, it arises from the above disclosure that the exhaust gas purifying apparatus according to the present invention allows the drawbacks affecting the prior art exhaust gas purifying apparatuses to be overcome or at least to be minimized. In particular, it has been demonstrated with the above disclosure that the exhaust gas purifying apparatus according to the present invention offers evident advantages in terms of functionality and design. It has in fact been demonstrated that the particular location of one or two of the two catalysts in the exhaust gas purifying apparatus according to the present invention allows the activation temperature of both catalysts to be reached quickly after the start of the engine, with evident advantages in terms of reduced pollution. Further advantages of the exhaust gas purifying apparatus according to the present invention relate to its reduced dimension and to the corresponding possibility of improving the design of the motorcycle.

While the present invention has been described with reference to the particular embodiment depicted in the drawings, it has to be understood that the present invention is not limited to the particular embodiments described but rather that various amendments may be introduce into the embodiments described without departing from the scope of the present invention, which is defined by the appended claims.

For instance, it will appear clear to those skilled in the art that different catalysts along those known in the art may be implemented and used in the exhaust gas purifying apparatus according to the present invention. As an example, catalysts comprising a metal member with a predefined number of holes and a layer of catalyst material adhered to said metal member may be used in combination with the exhaust gas purifying apparatus according to the present invention. However, the kind of catalyst may be selected according to the circumstances and/or exigencies.

## Claims

1. An exhaust gas purifying apparatus (1) for a motorcycle (10) comprising an engine (11) with a cylinder (12) and an exhaust port (12a) located at a front portion of said cylinder(12), said exhaust gas purifying apparatus comprising a pipe (2) with a first end portion (2a) adapted to be connected to said exhaust port (12a) and a first intermediate portion (2b) accommodating a first catalyst (3b), and disposed in a front area of said engine (11) once said apparatus has been mounted on said motorcycle (10); said pipe (2) comprising a second intermediate portion (2c) accommodating a second catalyst (3c) and disposed in a front area of said cylinder (12) once said apparatus has been mounted on said motorcycle;
**characterized in that**
once said apparatus has been mounted on said motorcycle said first and second intermediate portions (2b, 2c) are disposed on opposite sides with respect to the longitudinal plane of symmetry of said motorcycle (10); and **in that** said first and second intermediate portions (2b, 2c) are disposed substantially vertically.

2. An exhaust gas purifying apparatus as claimed in claim 1,
**characterized in that**
once said apparatus has been mounted on said motorcycle (10) said first and second intermediate portions (2b, 2c) extend inclined inwardly downwards when viewed from the front and rear side of the vehicle.

3. An exhaust gas purifying apparatus as claimed in claim 1,
**characterized in that**
once said apparatus has been mounted on said motorcycle (10) said first and second intermediate portions (2b, 2c) of said pipe (2) are disposed substantially parallel to each other.

4. An exhaust gas purifying apparatus as claimed in claims 1 to 3,
**characterized in that**
once said apparatus has been mounted on said motorcycle (10) said first and second intermediate portions (2b, 2c) are disposed at a distance from each other in a width direction of the motorcycle larger than the thickness of a front wheel of said motorcycle, with said first and second intermediate portions (2b, 2d) being visible when viewing the motorcycle from the front.

5. An exhaust gas purifying apparatus as claimed in one of claims 1 to 4,
**characterized in that**
said pipe (2) further comprises a third intermediate portion (2d) interposed between said first and second intermediate portion (2b, 2c),and **in that** once said apparatus has been mounted on said motorcycle (10) said third intermediate portion (2d) is disposed substantially horizontally.

6. An exhaust gas purifying apparatus as claimed in one of claims 1 to 5,
**characterized in that**
said pipe further comprises a fourth intermediate portion (2e) disposed between said first end portion (2a) and said first intermediate portion (2b).

7. An exhaust gas purifying apparatus as claimed in claim 6,
**characterized in that**
once said apparatus (1) has been mounted on said motorcycle (10), with said first end portion (2a) of said pipe (2) being connected to said exhaust port (12a), said fourth intermediate portion (2e) extends downward from said first end portion (2a).

8. An exhaust gas purifying apparatus as claimed in one of claims 1 to 7,
**characterized in that**
said pipe (2) further comprises a fifth intermediate portion (2f) extending toward the rear of said motorcycle, and passing along side said cylinder block (12) once said apparatus has been mounted on said motorcycle (10).

9. An exhaust gas purifying apparatus as claimed in one of claims 1 to 8,
**characterized in that**
once said apparatus has been mounted on said motorcycle (10) said first and second intermediate portions (2b, 2c) are disposed within the overall width of a crankcase (21) of said engine (11).

10. An exhaust gas purifying apparatus as claimed in one of claims 1 to 9,
**characterized in that**
said pipe (2) further comprises a second end portion (2g) opposed to said first end portion (2a) and a silencer (2s) connected to said second end portion (2g).

11. An exhaust gas purifying apparatus as claimed in one of claims 1 to 10,
**characterized in that**
said two catalysts are of the kind comprising a metal member with a predefined number of holes and a layer of catalyst material adhered to said metal member.

12. An exhaust gas purifying apparatus as claimed in claim 11,
**characterized in that**
said metal member has a substantially cylindrical shape.

13. An exhaust gas purifying apparatus as claimed in one of claims 1 to 12
**characterized in that**
said exhaust gas purifying apparatus comprises a silencer (2s) disposed in a rear area of said engine (11) once said apparatus has been mounted on said motorcycle (10).

14. A motorcycle (10), comprising an exhaust gas purifying apparatus as defined in at least one of the preceding claims 1 to 13.

15. A motorcycles claimed in claim 14,
**characterized in that**
a fifth portion (2f) of said pipe (2) of said apparatus (1) is disposed so as to pass along the right or left sides of said cylinder block (12).

16. A motorcycle as claimed in claim 14 or 15,
**characterized in that**
said cylinder block comprises a plurality of exhaust ports (12a), and **in that** side pipe (2) of said apparatus (1) comprises a corresponding plurality of first end portions (2a), each connected to a corresponding exhaust port (12a).

17. A motorcycle as claimed in one of the claims 14 to 16,
**characterized in that**
said cylinder block comprises two exhaust ports (12a), and **in that** said pipe (2) of said apparatus (1) comprises two first end portions (2a).

## Patentansprüche

1. Abgasreinigungsvorrichtung (1) für ein Motorrad (10), das einen Motor (11) mit einem Zylinder (12) und einer Auspufföffnung (12a) umfasst, die sich an einem vorderen Abschnitt des Zylinders (12) befindet, wobei die Abgasreinigungsvorrichtung ein Rohr (2) mit einem ersten Endabschnitt (2a), der zur Verbindung mit der Auspufföffnung (12a) eingerichtet ist, sowie einem ersten Zwischenabschnitt (2b) umfasst, der einen ersten Katalysator (3b) aufnimmt, und sie in einem vorderen Bereich des Motors (11) angeordnet ist, wenn die Vorrichtung an dem Motorrad (10) angebracht worden ist, wobei das Rohr (2) einen zweiten Zwischenabschnitt (2c) umfasst, der einen zweiten Katalysator (3c) aufnimmt und in einem vorderen Bereich des Zylinders (12) angeordnet ist, wenn die Vorrichtung an dem Motorrad angebracht worden ist;
**dadurch gekennzeichnet, dass**
wenn die Vorrichtung an dem Motorrad angebracht worden ist, der erste und der zweite Zwischenabschnitt (2b, 2c) an einander gegenüberliegenden Seiten in Bezug auf die Längs-Symmetrieebene des Motorrads (10) angeordnet sind, und dass der erste und der zweite Zwischenabschnitt (2b, 2c) im Wesentlichen vertikal angeordnet sind.

2. Abgasreinigungsvorrichtung nach Anspruch 1,
**dadurch gekennzeichnet, dass**
wenn die Vorrichtung an dem Motorrad (10) angebracht worden ist, sich der erste und der zweite Zwischenabschnitt (2b, 2c), von der Vorder- und der Rückseite des Fahrzeugs aus gesehen, nach innen geneigt nach unten erstrecken.

3. Abgasreinigungsvorrichtung nach Anspruch 1,
**dadurch gekennzeichnet, dass**
wenn die Vorrichtung an dem Motorrad (10) angebracht worden ist, der erste und der zweite Zwischenabschnitt (2b, 2c) des Rohrs (2) im Wesentlichen parallel zueinander angeordnet sind.

4. Abgasreinigungsvorrichtung nach den Ansprüchen 1 bis 3,
**dadurch gekennzeichnet, dass**
wenn die Vorrichtung an dem Motorrad (10) angebracht worden ist, der erste und der zweite Zwischenabschnitt (2b, 2c) in einem Abstand in einer Breitenrichtung des Motorrades zueinander angeordnet sind, der größer ist als die Dicke eines Vorderrades des Motorrads, wobei der erste und der zweite Zwischenabschnitt (2b, 2d), von der Vorderseite des Motorrads aus gesehen, sichtbar sind.

5. Abgasreinigungsvorrichtung nach einem der Ansprüche 1 bis 4,
**dadurch gekennzeichnet, dass**
das Rohr (2) des Weiteren einen dritten Zwischenabschnitt (2d) umfasst, der zwischen dem ersten und dem zweiten Zwischenabschnitt (2b, 2c) angeordnet ist, und **dadurch**, dass, wenn die Vorrichtung an dem Motorrad (10) angebracht worden ist, der dritte Zwischenabschnitt (2d) im Wesentlichen horizontal angeordnet ist.

6. Abgasreinigungsvorrichtung nach einem der Ansprüche 1 bis 5,
**dadurch gekennzeichnet, dass**
das Rohr des Weiteren einen vierten Zwischenabschnitt (2e) umfasst, der zwischen dem ersten Endabschnitt (2a) und dem ersten Zwischenabschnitt (2b) angeordnet ist.

7. Abgasreinigungsvorrichtung nach Anspruch 6,
**dadurch gekennzeichnet, dass**
wenn die Vorrichtung (1) an dem Motorrad (10) angebracht worden ist und der erste Endabschnitt (2a) des Rohrs (2) mit der Auspufföffnung (12a) verbunden ist, sich der vierte Zwischenabschnitt (2e) von dem ersten Endabschnitt (2a) nach unten erstreckt.

8. Abgasreinigungsvorrichtung nach einem der Ansprüche 1 bis 7,
**dadurch gekennzeichnet, dass**
das Rohr (2) des Weiteren einen fünften Zwischenabschnitt (2f) umfasst, der sich zur Rückseite des Motorrads hin erstreckt und an dem Zylinderblock (12) entlang verläuft, wenn die Vorrichtung an dem Motorrad (10) angebracht worden ist.

9. Abgasreinigungsvorrichtung nach einem der Ansprüche 1 bis 8,
**dadurch gekennzeichnet, dass**
wenn die Vorrichtung an dem Motorrad (10) angebracht worden ist, der erste und der zweite Zwischenabschnitt (2b, 2c) innerhalb der Gesamtbreite eines Kurbelgehäuses (21) des Motors (11) angeordnet sind.

10. Abgasreinigungsvorrichtung nach einem der Ansprüche 1 bis 9,
**dadurch gekennzeichnet, dass**
das Rohr (2) des Weiteren einen zweiten Endabschnitt (2g), der dem ersten Endabschnitt (2a) gegenüberliegt, und einen Schalldämpfer (2s) umfasst, der mit dem zweiten Endabschnitt (2g) verbunden ist.

11. Abgasreinigungsvorrichtung nach einem der Ansprüche 1 bis 10,
**dadurch gekennzeichnet, dass**
die zwei Katalysatoren von dem Typ sind, der ein Metallelement mit einer vordefinierten Anzahl von Löchern und eine Schicht aus Katalysatormaterial umfasst, die an dem Metallelement angeklebt ist.

12. Abgasreinigungsvorrichtung nach Anspruch 11,
**dadurch gekennzeichnet, dass**
das Metallelement eine im Wesentlichen zylindrische Form hat.

13. Abgasreinigungsvorrichtung nach einem der Ansprüche 1 bis 12,
**dadurch gekennzeichnet, dass**
die Abgasreinigungsvorrichtung einen Schalldämpfer (2s) umfasst, der in einem hinteren Bereich des Motors (11) angeordnet ist, wenn die Vorrichtung an dem Motorrad (10) angebracht worden ist.

14. Motorrad (10), das eine Abgasreinigungsvorrichtung nach wenigstens einem der vorangehenden Ansprüche 1 bis 13 umfasst.

15. Motorrad nach Anspruch 14,
**dadurch gekennzeichnet, dass**
ein fünfter Abschnitt (2f) des Rohrs (2) der Vorrichtung (1) so angeordnet ist, dass er an der rechten oder der linken Seite des Zylinderblocks (12) entlang verläuft.

16. Motorrad nach Anspruch 14 oder 15,
**dadurch gekennzeichnet, dass**
der Zylinderblock eine Vielzahl von Auspufföffnungen (12a) umfasst, und **dadurch**, dass das Rohr (2) der Vorrichtung (1) eine entsprechende Vielzahl erster Endabschnitte (2a) umfasst, die jeweils mit einer entsprechenden Auspufföffnung (12a) verbunden sind.

17. Motorrad nach einem der Ansprüche 14 bis 16,
**dadurch gekennzeichnet, dass**
der Zylinderblock zwei Auspufföffnungen (12a) umfasst, und **dadurch**, dass das Rohr (2) der Vorrichtung (1) zwei Endabschnitte umfasst.

## Revendications

1. Dispositif de purification de gaz d'échappement (1) pour une motocyclette (10) comprenant un moteur (11) avec un cylindre (12) et un orifice d'échappement (12a) situé au niveau d'une partie avant dudit cylindre (12), ledit dispositif de purification de gaz d'échappement comprenant un tuyau (2) avec une première partie d'extrémité (2a) adaptée pour être reliée audit orifice d'échappement (12a) et une première partie intermédiaire (2b) contenant un premier catalyseur (3b), et disposée dans une zone avant dudit moteur (11) une fois que ledit dispositif a été monté sur ladite motocyclette (10) ; ledit tuyau (2) comprenant une deuxième partie intermédiaire (2c) contenant un deuxième catalyseur (3c) et disposée dans une zone avant dudit cylindre (12) une fois que ledit dispositif a été monté sur ladite motocyclette ;
**caractérisé en ce que**
une fois que ledit dispositif a été monté sur ladite motocyclette, lesdites première et deuxième parties intermédiaires (2b, 2c) sont disposées sur des côtés opposés par rapport au plan longitudinal de symétrie de ladite motocyclette (10) ; et **en ce que** lesdites première et deuxième parties intermédiaires (2b, 2c) sont disposées sensiblement verticalement.

2. Dispositif de purification de gaz d'échappement selon la revendication 1,
**caractérisé en ce que**
une fois que ledit dispositif a été monté sur ladite motocyclette (10), lesdites première et deuxième parties intermédiaires (2b, 2c) s'étendent inclinées vers l'intérieur et vers le bas lorsqu'elles sont vues à partir des côtés avant et arrière du véhicule.

3. Dispositif de purification de gaz d'échappement selon la revendication 1,
**caractérisé en ce que**
une fois que ledit dispositif a été monté sur ladite motocyclette (10), lesdites première et deuxième parties intermédiaires (2b, 2c) dudit tuyau (2) sont disposées sensiblement parallèlement l'une à l'autre.

4. Dispositif de purification de gaz d'échappement selon les revendications 1 à 3,
**caractérisé en ce que**
une fois que ledit dispositif a été monté sur ladite motocyclette (10), lesdites première et deuxième parties intermédiaires (2b, 2c) sont disposées à distance l'une de l'autre dans une direction de largeur de la motocyclette plus grande que l'épaisseur d'une roue avant de ladite motocyclette, lesdites première et deuxième parties intermédiaires (2b, 2d) étant visibles lors d'une observation de la motocyclette à partir de l'avant.

5. Dispositif de purification de gaz d'échappement selon l'une des revendications 1 à 4,
**caractérisé en ce que**
ledit tuyau (2) comprend en outre une troisième partie intermédiaire (2d) interposée entre lesdites première et deuxième parties intermédiaires (2b, 2c), et **en ce que**, une fois que ledit dispositif a été monté sur ladite motocyclette (10), ladite troisième partie intermédiaire (2d) est disposée sensiblement horizontalement.

6. Dispositif de purification de gaz d'échappement selon l'une des revendications 1 à 5,
**caractérisé en ce que**
ledit tuyau comprend en outre une quatrième partie intermédiaire (2e) disposée entre ladite première partie d'extrémité (2a) et ladite première partie intermédiaire (2b).

7. Dispositif de purification de gaz d'échappement selon la revendication 6,
**caractérisé en ce que**
une fois que ledit dispositif (1) a été monté sur ladite motocyclette (10), ladite première partie d'extrémité (2a) dudit tuyau (2) étant reliée audit orifice d'échappement (12a), ladite quatrième partie intermédiaire (2e) s'étend vers le bas à partir de ladite première partie d'extrémité (2a).

8. Dispositif de purification de gaz d'échappement selon l'une des revendications 1 à 7,
**caractérisé en ce que**
ledit tuyau (2) comprend en outre une cinquième partie intermédiaire (2f) s'étendant vers l'arrière de ladite motocyclette, et passant le long dudit bloc-cylindres (12) une fois que ledit dispositif a été monté sur ladite motocyclette (10).

9. Dispositif de purification de gaz d'échappement selon l'une des revendications 1 à 8,
**caractérisé en ce que**
une fois que ledit dispositif a été monté sur ladite motocyclette (10), lesdites première et deuxième parties intermédiaires (2b, 2c) sont disposées dans la largeur globale d'un carter (21) dudit moteur (11).

10. Dispositif de purification de gaz d'échappement selon l'une des revendications 1 à 9,
**caractérisé en ce que**
ledit tuyau (2) comprend en outre une deuxième partie d'extrémité (2g) opposée à ladite première partie d'extrémité (2a) et un pot d'échappement (2s) relié à ladite deuxième partie d'extrémité (2g).

11. Dispositif de purification de gaz d'échappement selon l'une des revendications 1 à 10,
**caractérisé en ce que**
lesdits deux catalyseurs sont du type comprenant un élément métallique avec un nombre de trous prédéfini et une couche de matériau de catalyseur collée audit élément métallique.

12. Dispositif de purification de gaz d'échappement selon la revendication 11,
**caractérisé en ce que**
ledit élément métallique a une forme sensiblement cylindrique.

13. Dispositif de purification de gaz d'échappement selon l'une des revendications 1 à 12,
**caractérisé en ce que**
ledit dispositif de purification de gaz d'échappement comprend un pot d'échappement (2s) disposé dans une zone arrière dudit moteur (11) une fois que ledit dispositif a été monté sur ladite motocyclette (10).

14. Motocyclette (10), comprenant un dispositif de purification de gaz d'échappement selon au moins l'une des revendications 1 à 13 précédentes.

15. Motocyclette selon la revendication 14,
**caractérisée en ce que**
une cinquième partie (2f) dudit tuyau (2) dudit dispositif (1) est disposée de manière à passer le long du côté droit ou gauche dudit bloc-cylindres (12).

16. Motocyclette selon la revendication 14 ou 15,
**caractérisée en ce que**
ledit bloc-cylindres comprend une pluralité d'orifices d'échappement (12a), et **en ce que** le tuyau latéral (2) dudit dispositif (1) comprend une pluralité correspondante de premières parties d'extrémité (2a), chacune étant reliée à un orifice d'échappement (12a) correspondant.

17. Motocyclette selon l'une des revendications 14 à 16,
**caractérisée en ce que**
ledit bloc-cylindres comprend deux orifices d'échappement (12a), et **en ce que** ledit tuyau (2) dudit dispositif (1) comprend deux premières parties d'extrémité (2a).
